# EUROPEAN PATENT APPLICATION

(11) **EP 1 857 943 A1**
(43) Date of publication of application: **21.11.2007**
(21) Application number: 07251668.5
(22) Date of filing: 20.04.2007
(51) Int. Cl.: G06F 12/14

(54) **Computer system having memory protection function**

(30) Priority: 12.05.2006 JP 2006133949
(71) Applicant: Sharp Kabushiki Kaisha, Osaka-shi, Osaka 545-8522 (JP)
(72) Inventor: Ohyama, Shigeo, Nara 631-0006 (JP)
(74) Representative: Brown, Kenneth Richard

(57) **Abstract**

A computer system for preventing secret data in a memory area from being erased, altered or leaked due to a buffer overflow attack and the like comprises a memory map circuit (15) for storing an access control memory map which defines whether the CPU (10) has an access right for executing a program with respect to each address of the memory area (19), an access right determination circuit (16) for determining whether the CPU (10) has the access right to the memory area of an execution program storage address (Spc) designated by a program counter (20) based on the access control memory map, and outputting an access prohibition signal (SC) which makes the CPU (10) execute a predetermined operation to disable the CPU (10) from accessing the memory area of the execution program storage address when the CPU (10) does not have the access right.

## Description

### BACKGROUND OF THE INVENTION

### 1. Field of the Invention

The present invention relates to access control for preventing secret data in a memory area from being erased, altered or leaked due to carelessness of a user or illegal usage, in a computer system comprising a CPU (central processing unit) that can execute a computer program and one or more memory devices in which the computer program and data can be stored, and more particularly, to a data protection technique for a memory area in which data including secret data is stored.

### 2. Description of the Related Art

According to a computer system comprising a CPU and one or more memory devices, access controlling means to the memory device is generally provided in the system in order to avoid situations in which the operation of the entire system becomes unstable or cannot be performed due to an unexpected access or an unauthorized access from the CPU to the memory device.

According to conventional access control, a user determines whether there is an access right to a file by adding an attribute to each file in general. The user can execute an operation such as reading/writing to the file to which the user has an access right.

However, according to the method for determining whether there is an access right to the file or not by the user, an access control list file containing the access right can be accessed by an application program, so that the file could be erased, altered or leaked by the application. In addition, the file could be illegally erased, altered or leaked by a malicious user.

In order to solve the above problem, a conventional technique disclosed in Japanese Patent Application Laid-Open Publication No. 2003-345654 is shown in Fig. 10. According to a computer system disclosed in the Japanese Patent Application Laid-Open Publication No. 2003-345654, a host OS (Operating System) 102 that a user directly uses and a guest OS 103 which manages a file to be protected are operated using a plurality of OS control programs 104. A communication control program 110 determines whether access is allowed or not to the access request from the outside, based on an access control list 119, and activates the guest OS 103 when the access is allowed to access the file to be protected. The constitution example of a hardware to implement the access control includes Execute Disable Bit used in a MPU (microprocessor) and the like produced by Intel Corporation. According to this example, a real address is converted to a virtual address such as a page and access control is performed by adding attributes such as read/write/execution to each page. This function can implement the access control of the guest OS and the host OS.

However, the plurality of OS control programs can access the access control list file. In addition, a stack area that is a work memory in general varies in size depending on the guest OS or application to be activated and it is hard to set the access right by the page. When the data in the stack area can be destroyed, altered and replaced with a malicious program code by a buffer overflow attack and the like, the authorities of the guest OS, the host OS or the plurality of OS control programs can be usurped. Such vulnerability could appear when the stack area is used in holding argument data (variable) or storing a return address from a subroutine. For example, specification of C language and the like that is a program development language corresponds to it, and it is very difficult to implement perfect protection only with the software.

Next, the destroying or altering operation of data or a program known as the buffer overflow attack will be described taking a program written in C language as an example.

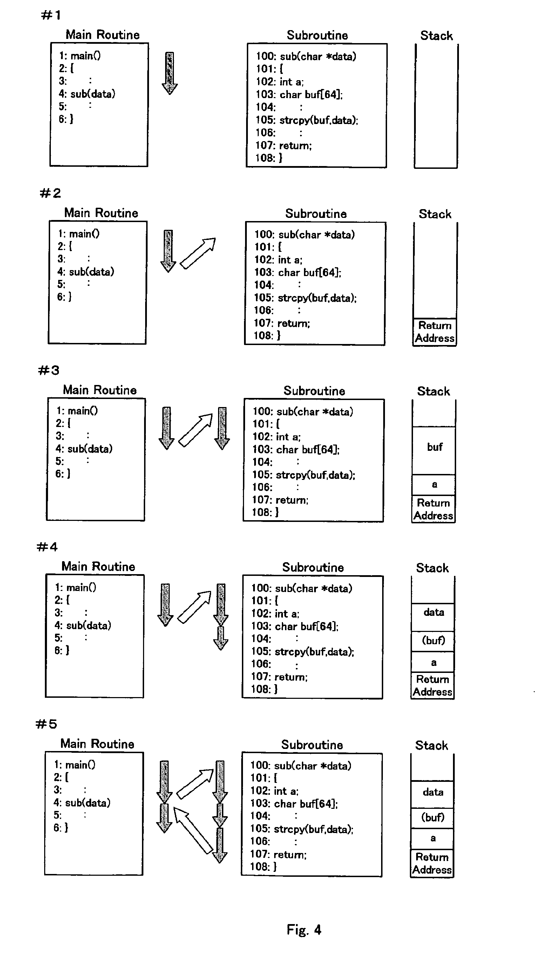

First, Fig. 4 shows executions of a normal program and variations in state of the stack area (#1 to #5). Since the stack area is a temporal storage area of data, it is set on a RAM (Random Access Memory).

The stack area is used in the following program execution operations (#1 to #5) in general.
#1 : The program of a main routine is executed.
#2 : A subroutine is called and a return address is stored in the stack area.
#3 : A local variable area (a, Buf) in the subroutine is stored in the stack area.
#4 : Input data (Data) is stored in the variable (Buf).
#5 : The subroutine is completed and the operation returns to the main routine referring to the return address stored in the stack area.

Here, it is to be noted that although the stack area is released when the operation returns to the main routine at #5, the data remains in the stack area.

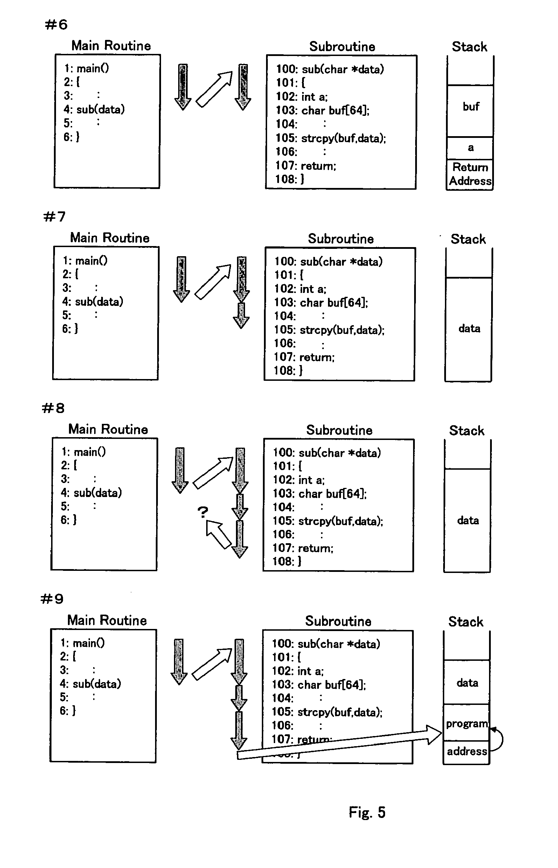

Fig. 5 shows executions of the program and the variations in state of the stack area (#6 to #9) when the buffer overflow attack occurs.
#6 : The same operations as the normal operations #1 to #3 shown in Fig. 4 are performed.
#7 : Data (Data) more than the size ensured in the variable (Buf) is inputted. Since a "strcpy" function used in the C language and the like does not check the data size, for example, another area in the stack area is overwritten beyond the Buf area.
#8 : Even when the subroutine is completed, since a correct return address is overwritten, the operation cannot return to the original place.
#9 : When a program code (program) and an address (address) to return the control to the head of the program code are buried in the Data, a program just as an attacker intended can be executed.

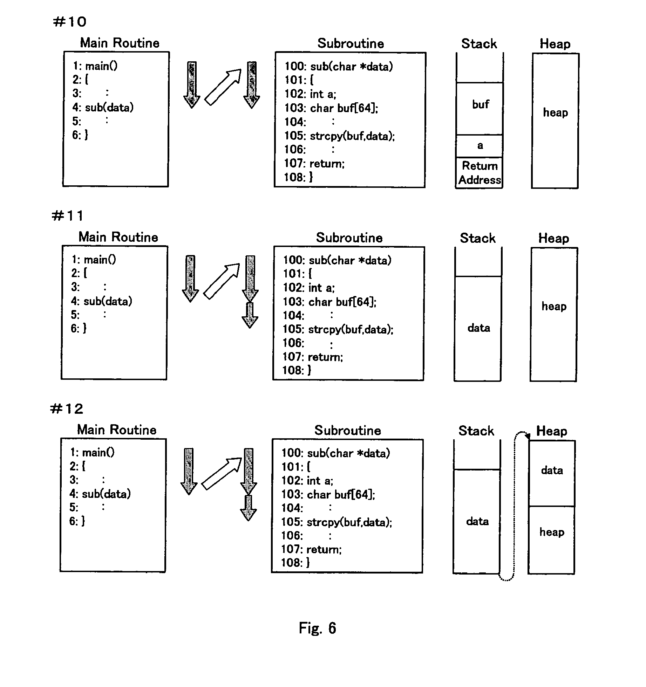

Furthermore, the same attack can occur not only in the stack area but also in a heap area that is a temporal data holding area on a RAM. Fig. 6 shows executions of the program and variations in states of the stack area and the heap area (#10 to #12) when a data destruction is eroded from the stack area to the heap area under a buffer overflow attack.
#10 : The same operations as the normal operations #1 to #3 shown in Fig. 4 are performed.
#11 : Data (Data) more than the size ensured in the variable (Buf) is inputted.
#12 : Data destruction is eroded to the heap area on the RAM by the

### Data input.

When the heap area is destroyed, the normal operation cannot be performed any more and the operation could be performed at the mercy of the attacker. Thus, through the above operations, the program the attacker intended can be executed and internal secret data can be erased, altered or leaked.

### SUMMARY OF THE INVENTION

The present invention was made in view of the above problems and it is an object of the present invention to provide a computer system having a memory protection function in which even when data in a stack area is altered to a malicious code in executing a program by an OS or an application, a malicious program is prevented from being executed by the altered code and secret data in a memory area can be prevented from being erased, altered or leaked.

A computer system according to the present invention in order to attain the above object comprises a CPU for executing a computer program, a memory area including one or more memory devices for storing the computer program and data, and a memory map circuit for storing an access control memory map which defines whether the CPU has an access right for executing a program with respect to each address of the memory area, and it is characterized as first characteristics in that the memory area in an address range in which the access control memory map defines that the CPU does not have the access right is allowed to be accessed by normal reading and writing, but is prohibited to be accessed by program execution from the CPU.

According to the above computer system of the first characteristics, since the access control memory map defines whether there is the access right for executing a program, and there is provided the address range in which although normal reading/writing can be performed, the access for executing the program is not allowed, even when the data in the memory area within the address range is replaced with a malicious program by the normal reading/writing, secret data in the memory area is prevented from being erased, altered or leaked by the execution of the malicious program, whereby the secret data in the memory area can be safely protected.

Furthermore, the computer system according to the present invention is characterized as second characteristics by further comprising an access right determination circuit for determining whether the CPU has the access right to the memory area of an execution program storage address designated by a program counter of the CPU based on the access control memory map, and outputting an access prohibition signal which makes the CPU execute a predetermined operation to disable the CPU from accessing the memory area of the execution program storage address when the CPU does not have the access right, in addition to the first characteristics.

According to the computer system of the second characteristics, since the access to the memory area in the address range in which the access control memory map defines that there is no access right for executing the program is prohibited as the access for executing the program from the CPU when the execution program storage address for executing the program designated by the program counter of the CPU is determined that there is no access right based on the access control memory map, even when the data in the memory area within the address range is replaced with a malicious program by the normal reading/writing, secret data in the memory area is prevented from being erased, altered or leaked by the execution of the malicious program, whereby the secret data in the memory area can be safely protected.

Furthermore, the computer system according to the present invention is characterized as third characteristics in that the access right determination circuit comprises a matching circuit for receiving the input of the execution program storage address from the program counter and the input of the access control memory map from the memory map circuit and comparing the execution program storage address to the access control memory map, and enabling the access prohibition signal based on the comparison result of the matching circuit, in addition to the second characteristics.

According to the computer system of the third characteristics, based on the comparison result between the execution program storage address and the address range in which the access control memory map defines that there is the access right for executing the program or not, it can be determined whether there is the access right of the execution program storage address or not, and even when a malicious program is overwritten in the address range in which there is no access right other than the address range in which a legitimate program is stored, it cannot be executed, so that the secret data in the memory area can be prevented from being erased, altered or leaked by the execution of the malicious program, whereby the secret data in the memory area can be safely protected.

Furthermore, the computer system according to the present invention is characterized as fourth characteristics in that the access right determination circuit determines the input of the execution program storage address from the program counter in synchronization with a timing signal enabled when the CPU fetches an instruction, in addition to the third characteristics.

According to the computer system of the fourth characteristics, when the input of the execution program storage address is determined in synchronization with the timing signal enabled when the CPU fetches the instruction, the execution program storage address can be correctly determined and the effect of the computer system of the third characteristics can be surely provided.

Furthermore, the computer system according to the present invention is characterized as fifth characteristics in that the address range in which the access control memory map defines that the CPU does not have the access right is fixed as a data storage only address area, in addition to any one of the second to fourth characteristics.

According to the computer system of the fifth characteristics, since the address range without the access right from the CPU is fixed, it can be used as a safety data storage area.

Furthermore, the computer system according to the present invention is characterized as sixth characteristics in that the address range in which the access control memory map defines that the CPU does not have the access right is used as a stack area, in addition to any one of the second to fourth characteristics.

According to the computer system of the sixth characteristics, since the data on the stack area is not executable as a program, even when a malicious program code is loaded on the stack by a buffer overflow attack and the like, illegal execution can be prevented.

Furthermore, the computer system according to the present invention is characterized as seventh characteristics in that the memory map circuit has such a constitution that the contents of the access control memory map cannot be changed by the program execution of the CPU, in addition to any one of the second to sixth characteristics.

According to the computer system of the seventh characteristics, since the contents of the access control memory map cannot be altered by the malicious program, data is highly prevented from being erased, altered or leaked by the malicious program. In addition, the access from the CPU to the memory map circuit to change the contents of the access control memory map may be limited by the usage state of the computer system by the user, that is, after shipment.

Furthermore, the computer system according to the present invention is characterized as eighth characteristics in that an address range in which the access control memory map defines that the CPU does not have the access right varies according to the increase or decrease of the stack area, in addition to the sixth characteristics.

According to the computer system of the eighth characteristics, since the address range having no access right varies according to the stack area that increases or decreases during the execution of the program, an access limit area can be set effectively.

Furthermore, the computer system according to the present invention is characterized as ninth characteristics in that a part of the memory area is divided into a stack area without the access right from the CPU and a heap area with the access right from the CPU, and when the stack area overflows and the heap area is eroded, the access control memory map varies so that the eroded heap area becomes a state without the access right from the CPU, in addition to the eighth characteristics.

According to the computer system of the ninth characteristics, even when the data in the heap area with the access right for executing the program from the CPU is replaced with a malicious program code due to overflow of the stack area, it is not executable, so that the malicious program can be prevented from being executed.

Furthermore, the computer system according to the present invention is characterized as tenth characteristics in that a part of the memory area is divided into a stack area without the access right from the CPU and a heap area with the access right from the CPU, and the address ranges of the stack area and the heap area are set separately each other so that the heap area is not eroded even when the stack area overflows, in addition to any one of the second to eighth characteristics.

According to the computer system of the tenth characteristics, data of the heap area with the access right for executing the program from the CPU is prevented from being replaced with a malicious program and the like due to the overflow of the stack area.

Furthermore, the computer system according to the present invention is characterized as eleventh characteristics in that the access prohibition signal makes the CPU start a predetermined interrupt operation, in addition to any one of the second to tenth characteristics.

According to the computer system of the eleventh characteristics, when an illegal program buried in the stack area is going to be executed, the predetermined interrupt operation is started to prevent the execution of the illegal program.

Furthermore, the computer system according to the present invention is characterized as twelfth characteristics in that the access prohibition signal makes the CPU start a reset operation, in addition to any one of the second to tenth characteristics.

According to the computer system of the twelfth characteristics, when an illegal program buried in the stack area is going to be executed, the illegal program can be prevented from being executed by resetting the CPU to be initialized.

Furthermore, an IC card according to the present invention is characterized by mounting the computer system having the memory protection function according to any one of the above characteristics.

According to the IC card of the above characteristics, the illegal program can be effectively prevented from being executed by the buffer overflow attack and the like.

### BRIEF DESCRIPTION OF THE DRAWINGS

Fig. 1 is a block diagram showing the circuit constitution of a computer system according to one embodiment of the present invention;
Fig. 2 is a circuit diagram showing one example of the input signal, output signal and internal circuit constitution of an access right determination circuit of the computer system according to the present invention;
Fig. 3 is a block diagram showing another circuit constitution of the computer system according to one embodiment of the present invention;
Fig. 4 is a view showing the execution of a legitimate program and variations in state of a stack area when a buffer overflow attack does not occur;
Fig. 5 is a view showing the execution of the legitimate program and variations in state of the stack area when the buffer overflow attack occurs;
Fig. 6 is a view showing the execution of the program and variations in state of the stack area and a heap area when data destruction is eroded from the stack area to the heap area under the buffer overflow attack;
Fig. 7 is a view showing one example of operation process for preventing an illegal program from being executed when the buffer overflow attack occurs in the computer system according to one embodiment of the present invention;
Fig. 8 is a view showing another example of the operation process for preventing an illegal program from being executed when the buffer overflow attack occurs in the computer system according to one embodiment of the present invention;
Fig. 9 is a block diagram showing the constitution example of an IC card according to the present invention; and

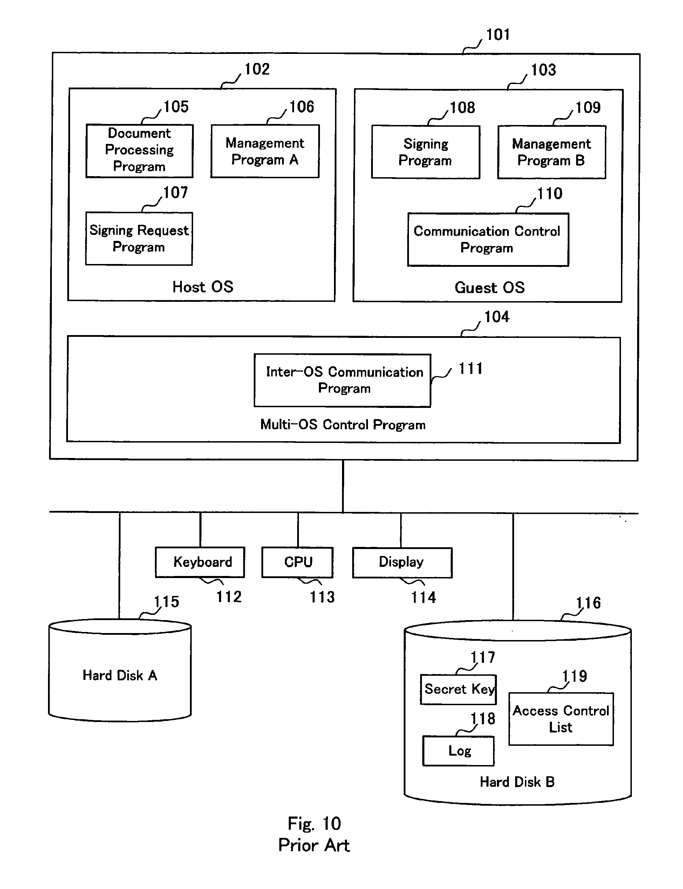

Fig. 10 is a block diagram showing one example of a conventional computer system having a data protecting function.

### DETAILED DESCRIPTION OF THE INVENTION

A computer system having a memory protection function according to the present invention (referred to as the "system of the present invention" hereinafter) will be described with reference to the drawings hereinafter.

### (First Embodiment)

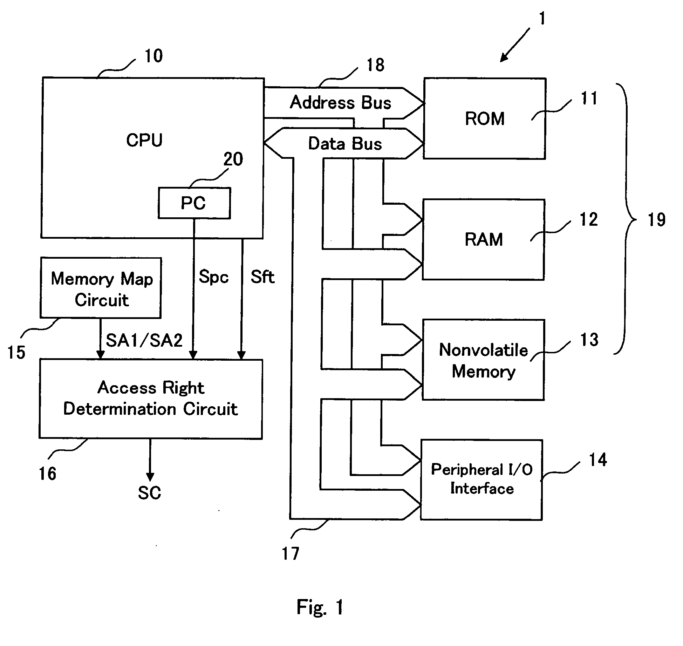

Fig. 1 is a schematic view showing the constitution example of a system 1 of the present invention. As shown in Fig. 1, the system 1 of the present invention comprises a CPU (central processing unit) 10, a ROM (read only memory) 11, RAM 12, a nonvolatile memory 13, a peripheral I/O interface 14, a memory map circuit 15, an access right determination circuit 16, a data bus 17, and an address bus 18. The CPU 10, the ROM 11, the RAM 12, the nonvolatile memory 13 and the peripheral I/O interface 14 are connected to each other through the data bus 17 and the address bus 18. The ROM 11, the RAM 12, and the nonvolatile memory 13 constitute a memory area 19 in which program codes and data executed by the CPU 10 are stored.

In addition, according to this embodiment, it is assumed that in the memory area 19, a program code area to store a program code and a fixed data area to store fixed data are formed in the ROM 11 and the nonvolatile memory 13 and a stack area to store dynamic data and another heap area in the memory area to be used in executing the program are formed in the RAM 12 in which data can be read and programmed at high speed.

The memory map circuit 15 comprises a RAM or a register and stores an access control memory map which defines whether the CPU 10 has an access right for executing the program (referred to as the "execution right" occasionally hereinafter) with respect to each address of the memory area 19 or not, and outputs the information of the access control memory map to the access right determination circuit 16. According to this embodiment, since the input/output of the memory map circuit 15 is separated from the data bus 17 and they are not connected directly, the contents of the access control memory map are prevented from being altered carelessly or illegally by the execution of the program by the CPU 10.

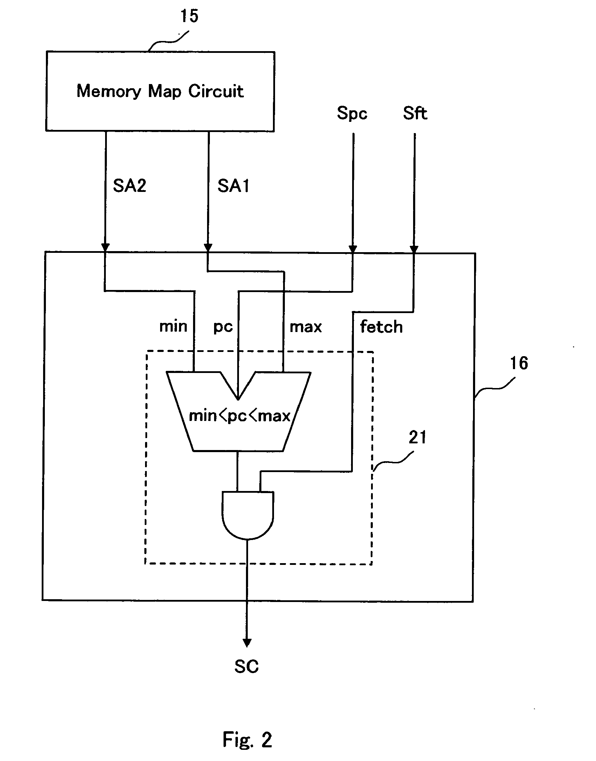

The access right determination circuit 16 determines whether there is the execution right to the memory area 19 specified by an execution program storage address Spc designated by the value of a program counter 20 in the CPU 10 or not with respect to each execution program storage address. Fig. 2 shows an input signal, an output signal and a detailed internal circuit constitution of the access right determination circuit 16. According to the example shown in Fig. 2, the information of the access control memory map outputted from the memory map circuit 15 is an upper limit address signal SA1 and a lower limit address signal SA2 showing the upper limit and the lower limit, respectively of a non-executable address range in which the access for executing the program from the CPU 10 is not allowed (that is, there is no execution right). The access right determination circuit 16 comprises a matching circuit 21 for comparing the execution program storage address Spc to the information SA1 and SA2 of the access control memory map, and the matching circuit 21 compares the execution program storage address Spc inputted from the program counter 20 with each of the upper limit address signal SA1 and the lower limit address signal SA2 to determine whether the execution program storage address Spc exists in the non-executable address range between the upper limit address signal SA1 and the lower limit address signal SA2 or not. In addition, according to this embodiment, it is determined whether the execution program storage address Spc exists in the non-executable address range, that is, whether there is the execution right of the execution program storage address Spc or not in synchronization with a fetch timing signal Sft inputted from the CPU 10 and enabled at a timing when the CPU 10 fetches an instruction. More specifically, when the execution program storage address Spc exists in the non-executable address range and the fetch timing signal Sft is in an enabled state (at the time of high level), it is determined that there is no execution right of the execution program storage address Spc and an access prohibition signal SC is enabled (switched to high level) to be outputted.

By the access prohibition signal SC, the CPU 10 accesses an address area in the memory area 19 specified by the execution program storage address Spc designated by the value of the program counter 20 and executes a process in which an illegal program stored in the address area is prevented from being executed as will be described below. As a result, in the whole address area of the memory area 19, the program illegally programmed in the non-executable address range specified by the access control memory map stored in the memory map circuit 15 cannot be executed, so that secret data stored in the memory area 19 is prevented from being erased, altered, or leaked by the execution of the illegal program.

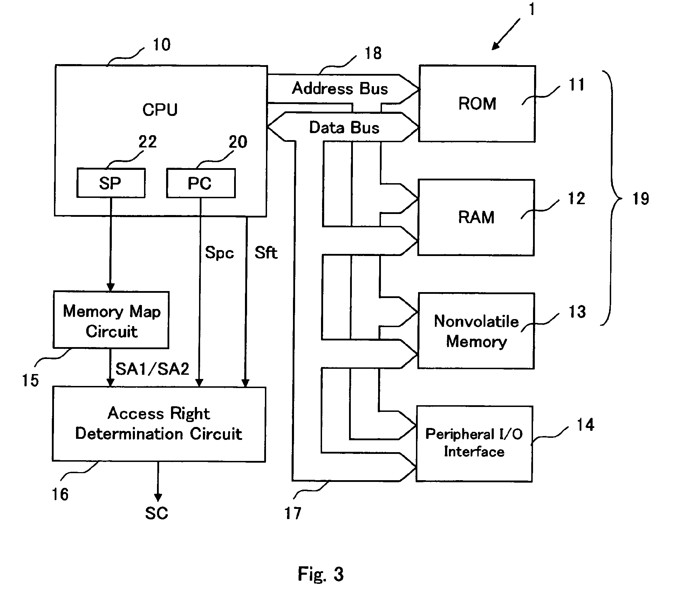

Furthermore, according to this system 1 in the present invention, as shown in Fig. 3, when the value of a stack pointer 22 outputted from the CPU 10 is used as the upper limit address signal SA1 showing the upper limit of the non-executable address range of the access control memory map and outputted from the memory map circuit 15, it can vary in accordance with the increase and decrease of the stack area. For example, the value SP of the stack pointer 22 outputted from the CPU 10 may be used as the upper limit address signal SA1 and the value subtracted by the stack area used in an active subroutine may be used as the lower limit address signal SA2 showing the lower limit of the non-executable address range.

### (Example 1)

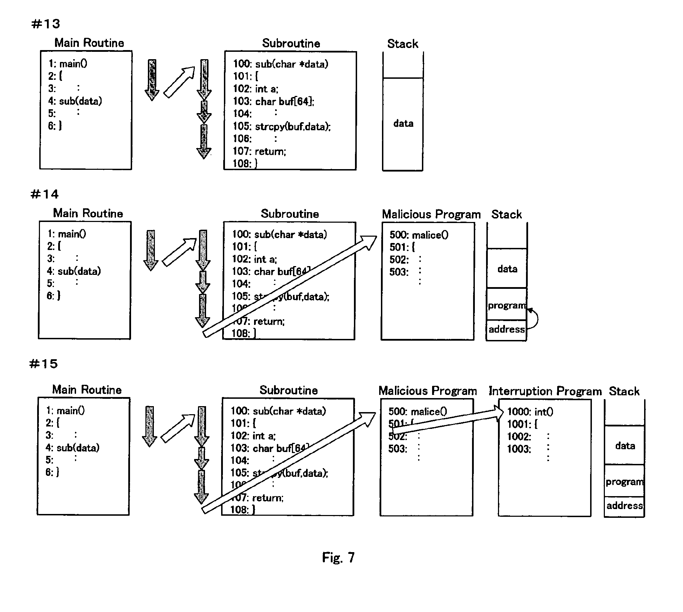

Next, a description will be made of one example of a protective operation of the system 1 of the present invention when a buffer overflow attack occurs as shown in Fig. 5 hereinafter. Fig. 7 shows execution of a legitimate program, prevention of execution of a malicious illegal program and variations in state of the stack area (#13 to #15) when the buffer overflow attack occurs.
#13 : The operations when the buffer overflow attack occurs are the same as #6 to #8 shown in Fig. 5.
#14 : The CPU 10 tries to move the control to the malicious illegal program buried in the stack area set in the non-executable address range by an altered return address. Here, the access right determination circuit 16 detects that the execution program storage address Spc designated by the value of the program counter 20 exists in the non-executable address range of the access control memory map stored in the memory map circuit 15, and the access prohibition signal SC is enabled.
#15 : When the access prohibition signal SC is enabled, the execution of the illegal program is detected and when the access prohibition signal SC is used as an interruption request signal to the CPU 10, an interruption process is started in the CPU 10. In this interruption process, internal secret data is prevented from being erased, altered, or leaked by the malicious, illegal program, by performing an appropriate operation such as clear (data erase) of the stack area.

Here, when data in the heap area is written beyond the stack area previously set as shown in #12 in Fig. 6 due to the buffer overflow attack at the above step #13, the CPU 10 tries to move the control to the malicious illegal program buried in the heap area by the altered return address.

However, since the designated value of the stack pointer is moved in the heap area by data programming beyond the stack area, the upper limit address signal SA1 showing the upper limit of the non-executable address range is also moved in the heap area and the execution right of the heap area eroded by the buffer overflow attack is changed from its original effective state to an ineffective state. Therefore, similar to the case of the #14, the access right determination circuit 16 detects that the execution program storage address Spc designated by the value of the program counter 20 is in the non-executable address range of the access control memory map stored in the memory map circuit 15, and the access prohibition signal SC is enabled. Then, the interrupting operation at the #15 is performed and the malicious illegal program buried in the heap area becomes non-executable and the internal secret data is prevented from being erased, changed or leaked.

In addition, by separating the address ranges of the stack area and the heap area set in the RAM 12 so as not to be continuous, more specifically by setting the address range of the interface between the stack area and the heap area to the address range of the ROM 11 or the nonvolatile memory 13, the heap area is prevented from being eroded by the buffer overflow attack, which is effective in protecting the area from the buffer overflow attack.

### (Example 2)

Next, another example of the protective operation in the system 1 of the present invention in the case where the buffer overflow attack occurs as shown in Fig 5 will be described. In this example 2, a description will be made of a protective operation from the buffer overflow attack after the whole system has been set to an initial state.

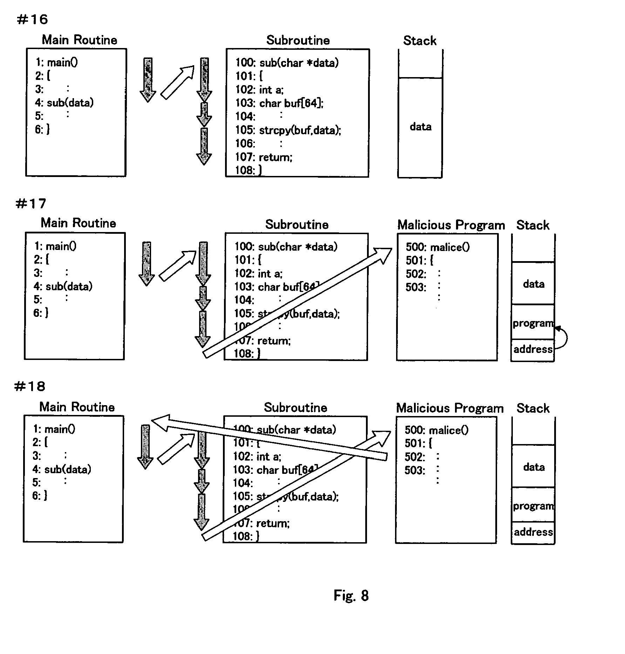

Fig. 8 shows program execution, prevention of execution of an illegal program and variations in state of the stack area (#16 to #18) when execution of the malicious illegal program is detected and a reset process is performed.
#16 : The operations when the buffer overflow attack occurs are the same operations as those #6 to #8 shown in Fig. 5.
#17 : The CPU 10 tries to move the control to the malicious illegal program buried in the stack area set in the non-executable address range by the altered return address. Here, the access right determination circuit 16 detects that the execution program storage address Spc designated by the value of the program counter 20 is in the non-executable address range of the access control memory map stored in the memory map circuit 15, and the access prohibition signal SC is enabled (similar to the #14 in the example 1).
#18 : When the access prohibition signal SC is enabled, the execution of the illegal program is detected and when the access prohibition signal SC is used as a reset request signal to the CPU 10, the reset process is started in the CPU 10 and the CPU 10 restarts. When the CPU 10 restarts, the malicious illegal program is further surely prevented from being executed.

Here, in the case where the data has been written in the heap area beyond the previously set stack area as shown in the #12 in Fig. 6 due to the buffer overflow attack in the step #16, the CPU 10 tries to move the control to the malicious illegal program buried in the heap area by an altered return address.

However, since the value designated by the stack pointer is moved to the heap area by data writing beyond the stack area, the upper limit address signal SA1 designating the upper limit of the non-executable address range is also moved into the heap area and the execution right of the heap area eroded by the buffer overflow attack is changed from the original effective state to an ineffective state. Therefore, similar to the case of the #17 (#14), the access right determination circuit 16 detects that the execution program storage address Spc designated by the value of the program counter 20 exists in the non-executable address range of the access control memory map stored in the memory map circuit 15, and the access prohibition signal SC is enabled. Thus, the reset operation of the above #18 is performed and the malicious illegal program buried in the heap area cannot be executed and the internal secret data can be prevented from being erased, altered or leaked.

### (Second Embodiment)

According to the first embodiment, the memory map circuit 15 comprises the RAM or the register, the non-executable address range defined by the access control memory map stored therein can vary physically and according to the constitution example shown in Fig. 3 especially, the description was made of the case where the non-executable address range varies according to the value of the stack pointer 22. However, according to this second embodiment, a description will be made of a case where a non-executable address range is previously fixed as an address area for storing data only. The address area for storing data only covers an entire address range of a RAM 12 containing a stack area and a heap area.

According to the second embodiment, an access control memory map is stored in a memory map circuit 15 such that it cannot be written by a hardware or software operation. Since the access control memory map cannot be written, the circuit constitution of the memory map circuit 15 can be simplified as compared with the first embodiment. In addition, the whole constitution of the system 1 of the present invention is the same as that shown in Fig. 1.

When the memory map circuit 15 comprises a ROM, although the non-executable address range is already fixed before shipment and cannot be changed after shipment, when the memory map circuit 15 comprises a RAM or a register, it can be set by the CPU 10 from the side of a tester together with a shipment test after manufacturing or according to a special program (stored in a nonvolatile memory 13 and the like). In the case of the latter, the executable range after manufacturing can be set with any means as long as there is no risk of altering the set contents by erasing the program after setting and the like.

According to the second embodiment, when the non-executable address range is fixed, the non-executable address range can be used as a perfect data only area by previously ensuring a storage area for secret information such as private information and setting the storage area to an area having absolutely no execution right.

Furthermore, when the function of the memory map circuit 15 in the first embodiment and the function of the memory map circuit 15 in the second embodiment are combined, that is, when the fixed non-executable address range and variable non-executable address range are combined, the malicious illegal program can be surely prevented from being executed.

### (Third Embodiment)

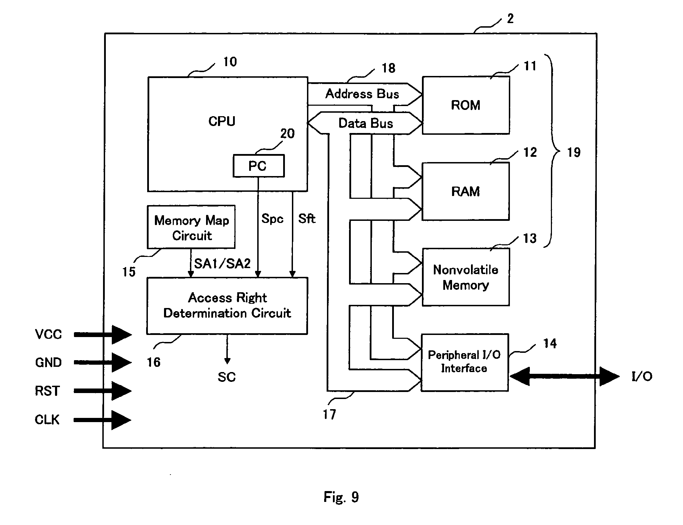

Next, a variation of the system 1 according to the first or second embodiment of the present invention will be described. Fig. 9 shows the constitution example of an IC card 2 on which the system 1 of the present invention is mounted. In addition, the same signs are allotted to the same components in the system 1 of the present invention shown in Fig. 1 and their description will be omitted. Important information such as a password or electron certification information has been stored in the IC card. Security of the IC card can be ensured by mounting the system 1 of the present invention against a person having designs on the data.

### (Another Embodiment)

Next, another embodiment of the system of the present invention will be described hereinafter.
(1) Although it is assumed that the address range of the stack area expands in the upper address direction according to the writing of the data and the value of the stack pointer 22 is used as the upper address signal SA1 designating the upper limit of the non-executable address range in the first embodiment, when the address range of the stack area expands in a lower address direction, the value of the stack pointer 22 may be used as the lower limit address signal SA2 designating the lower limit of the non-executable address range.
(2) Although the constitutions shown in Figs. 1 and 3 are illustrated as the constitution example of the system 1 of the present invention, the constitution example of the system 1 of the present invention is not limited to those. For example, although it is assumed that the memory area 19 comprises the three kinds of memory devices such as the ROM 11, RAM 12, and the nonvolatile memory 13 in the above each embodiment, the memory area used in executing the program by the CPU 10 may comprise the RAM 12 only.
(3) Although the memory map circuit 15 is provided separately in Figs. 1, 2 and 3 in the above each embodiment, it may be incorporated in the CPU 10 or the access right determination circuit 16. In addition, although the access right determination circuit 16 is separately provided in Figs. 1, 2 and 3, it may be incorporated in the CPU 10 as a hardware circuit.
(4) Although the IC card has been described as the variation of the system 1 of the present invention in the third embodiment, the variation of the system 1 of the present invention is not limited to the IC card.

The computer system according to the present invention can be applied to a computer system requiring access control in which secret data stored in a memory area is prevented from being erased, altered or leaked due to carelessness of a user or illegal usage.

Although the present invention has been described in terms of the preferred embodiment, it will be appreciated that various modifications and alternations might be made by those skilled in the art without departing from the spirit and scope of the invention. The invention should therefore be measured in terms of the claims which follow.

## Claims

1. A computer system having a memory protection function comprising:
a CPU for executing a computer program; and
a memory area including one or more memory devices for storing the computer program and data, **characterized in that**
the computer system comprises a memory map circuit for storing an access control memory map which defines whether the CPU has an access right for executing a program with respect to each address of the memory area, wherein
the memory area in an address range in which the access control memory map defines that the CPU does not have the access right is allowed to be accessed by normal reading and writing, but is prohibited to be accessed by program execution from the CPU.

2. The computer system according to claim 1, **characterized in that**
the computer system comprises an access right determination circuit for determining whether the CPU has the access right to the memory area of an execution program storage address designated by a program counter of the CPU based on the access control memory map, and outputting an access prohibition signal which makes the CPU execute a predetermined operation to disable the CPU from accessing the memory area of the execution program storage address when the CPU does not have the access right.

3. The computer system according to claim 2, **characterized in that**
the access right determination circuit comprises a matching circuit for receiving an input of the execution program storage address from the program counter and an input of the access control memory map from the memory map circuit and comparing the execution program storage address to the access control memory map, and enabling the access prohibition signal based on a comparison result of the matching circuit.

4. The computer system according to claim 3, **characterized in that**
the access right determination circuit determines the input of the execution program storage address from the program counter in synchronization with a timing signal enabled when the CPU fetches an instruction.

5. The computer system according to any one of claims 2 to 4, **characterized in that**
the address range in which the access control memory map defines that the CPU does not have the access right is fixed as a data storage only address area.

6. The computer system according to any one of claims 2 to 4, **characterized in that**
the address range in which the access control memory map defines that the CPU does not have the access right is used as a stack area.

7. The computer system according to any one of claims 2 to 6,
**characterized in that**
the memory map circuit has such a constitution that contents of the access control memory map cannot be changed by the program execution of the CPU.

8. The computer system according to claim 6, **characterized in that**
the address range in which the access control memory map defines that the CPU does not have the access right varies according to increase or decrease of the stack area.

9. The computer system according to claim 8, **characterized in that**
a part of the memory area is divided into a stack area without the access right from the CPU and a heap area with the access right from the CPU and the access control memory map varies so that an eroded heap area becomes a state without the access right from the CPU when the stack area overflows and the heap area is eroded.

10. The computer system according to any one of claims 2 to 8,
**characterized in that**
a part of the memory area is divided into a stack area without the access right from the CPU and a heap area with the access right from the CPU, and address ranges of the stack area and the heap area are set separately each other so that the heap area is not eroded even when the stack area overflows.

11. The computer system according to any one of claims 2 to 10, **characterized in that**
the access prohibition signal makes the CPU start a predetermined interrupt operation.

12. The computer system according to any one of claims 2 to 10, **characterized in that**
the access prohibition signal makes the CPU start a reset operation.

13. An IC card mounting the computer system having the memory protection function according to any one of claims 1 to 12.

14. The computer system according to claim 7, wherein the memory map circuit is separated from a data bus which provides data communication between the CPU and the memory area.
